Europäisches Patentamt

European Patent Office

Office européen des brevets

(19)

(11) Veröffentlichungsnummer: **0 006 519**
**B1**

(12)

# EUROPÄISCHE PATENTSCHRIFT

(45) Veröffentlichungstag der Patentschrift:
27.01.82

(51) Int. Cl.³: **B 29 D 27/02**, B 29 B 1/04

(21) Anmeldenummer: 79101869.0

(22) Anmeldetag: 11.06.79

(54) Verfahren und Vorrichtung zum Herstellen eines schäumfähigen Gemisches aus mindestens zwei fliessfähigen, schaumstoffbildenden Reaktionskomponenten und Zuschlagstoffen.

(30) Priorität: 29.06.78 DE 2828506

(43) Veröffentlichungstag der Anmeldung:
09.01.80 Patentblatt 80/1

(45) Bekanntmachung des Hinweises auf die Patenterteilung:
27.01.82 Patentblatt 82/4

(84) Benannte Vertragsstaaten:
BE DE FR GB IT NL SE

(56) Entgegenhaltungen:
DE-A-2 501 941

(73) Patentinhaber: BAYER AG, Zentralbereich Patente, Marken und Lizenzen, D-5090 Leverkusen 1, Bayerwerk (DE)

(72) Erfinder: Kreuer, Karl Dieter, Van 't-Hoff-Strasse 25, D-5090 Leverkusen 1 (DE)
Erfinder: Schulte, Klaus, Opladener Strasse 5, D-5090 Leverkusen 1 (DE)

EP 0 006 519 B1

## Verfahren und Vorrichtung zum Herstellen eines schäumfähigen Gemisches aus mindestens zwei fließfähigen, schaumstoffbildenden Reaktionskomponenten und Zuschlagstoffen

Die Erfindung betrifft ein Verfahren und eine Vorrichtung zum Herstellen eines schäumfähigen Gemisches aus mindestens zwei fließfähigen, schaumstoffbildenden Reaktionskomponenten und Zuschlagstoffen, wobei eine der Reaktionskomponenten zu einem Film ausgebreitet und dieser Film mit dem Zuschlagstoff zusammengebracht wird.

Bei der Herstellung von Polyurethan- oder Isocyanuratschaumstoffen müssen des öfteren Zuschlagstoffe beigegeben werden, um bestimmte Eigenschaften des Fertigproduktes zu erzielen, um Abfall verwerten zu können oder auch um die Materialkosten zu senken. Als preissenkende Zuschlagstoffe werden feinteilige Füllstoffe verwendet, wie beispielsweise Zement, Kalk, Kreide, Gips, Bariumsulfat sowie Schaumstoffpulver, das aus zerkleinerten Schaumstoffabfällen hergestellt worden ist. Als Zuschlagstoffe zur Erhöhung der Festigkeit oder Brandsicherheit dienen insbesondere Fasermaterialien, wie Kurzglasfasern, gemahlene Glasfasern, Kohlefasern oder auch andere Fasern auf anorganischer oder organischer Basis.

Das Einbringen der Zuschlagstoffe in das Reaktionsgemisch ist bereits auf die verschiedenste Weise versucht worden. Problematisch ist dabei die genaue Dosierung im Verhältnis zu den Reaktionskomponenten, das Vermeiden von Verstopfungen in den Rohrleitungen und das unerwünschte Eintragen von Luft mit den voluminösen Zuschlagstoffen. Unkontrolliert eingebrachte Luft stört die Schäumreaktion. Insbesondere wird durch größere Lufteinschlüsse die Schaumstruktur im Fertigteil gestört.

Aufgabe der Erfindung ist ein Verfahren und eine Vorrichtung, mit denen ein zuschlagstoffhaltiges Reaktionsgemisch herstellbar ist, aus dem anschließend einwandfreie Fertigteile herstellbar sind.

Diese Aufgabe wird mittels des erfindungsgemäßen Verfahrens dadurch gelöst, daß der Zuschlagstoff homogen verteilt auf den Film aufgegeben wird, daß die einzelnen Teilchen in den Film einsinken, wobei sie vom Komponentenmaterial umschlossen werden, und daß dieses zunächst als Film vorliegende Vorgemisch anschließend zu einem Strom zusammengeführt und der Mischstelle zugeleitet wird, wo die Vermischung mit der zweiten Reaktionskomponente erfolgt.

Dadurch wird erreicht, daß der aus feinen Teilchen bestehende Zuschlagstoff homogen über den von der Reaktionskomponente gebildeten Film verteilt werden kann. Dabei werden die einzelnen Teilchen voneinander getrennt und dringen in den Film ein, wobei sie von dem Komponentenmaterial umschlossen werden. Es ist dabei zweckmäßig, die Dicke des Films auf die Größe der Teilchen der Zuschlagstoffe abzustimmen, so daß der Film mindestens den Durchmesser der Teilchen aufweist. Bis der mit Zuschlagstoff beladene Film wieder zu einem Strom zusammengeführt und in den Mischkopf eingebracht wird, hat die an den einzelnen Teilchen etwa anhaftende Luft genügend Zeit, aus dem Film ins Freie zu entweichen.

Aus der DE-A-2 501 941 ist zwar bereits eine Vorrichtung zum Mischen von viskosen Stoffen mit Feststoffen bekannt, indem man auf zwei nebeneinanderliegende, einen Spalt bildende Walzen den viskosen Stoff als Film aufträgt und den feinteiligen Feststoff in den Einzugswinkel zwischen den Walzen einführt, so daß beim Passieren des Spaltes die Feststoffteilchen mit dem viskosen Stoff getränkt werden. Austrittsseitig wird das Gemisch von den Walzen abgestreift bzw. fällt von selbst auf ein darunter angeordnetes Förderband. Für den der Erfindung zugrunde liegenden Zweck ist diese Vorrichtung nicht geeignet, da keine genügend homogene Verteilung stattfinden würde. Insbesondere würde aber beim Zerreißen des Vorgemisches am Spaltaustritt und neuerlichen Zusammenführen wieder unerwünschte Luft eingeschlossen.

Vorzugsweise wird der Film auf einer geneigten Ebene geführt. Diese Maßnahme hat den Vorteil, daß der Film durch Schwerkraft gefördert wird und daß je nach der vorzugsweise einstellbaren Neigung der Ebene die Strömungsgeschwindigkeit beeinflußbar ist; insbesondere läßt sich die Neigung auch so einstellen, daß für die Teilchen ein Abrolleffekt besteht, d. h. die Teilchen wickeln das Material der sie umgebenden Komponente auf.

Nach einer besonderen Ausführungsform des erfindungsgemäßen Verfahrens wird nach dem Aufbringen des Zuschlagstoffes ein zweiter Film der Reaktionskomponente darüber gelegt. Diese Maßnahme ist besonders dann zweckmäßig, wenn der Anteil an Zuschlagstoff besonders hoch ist. Dieser Aufwand ist jedoch nur dann sinnvoll, falls bei Verwendung nur eines Films dieser nicht die Dicke der Teilchen der Zuschlagstoffe erreichen könnte.

Es versteht sich, daß mehrere Zuschlagstoffe gleichzeitig auftragbar sind. Ebenso ist es möglich, mehrere Schichten von Zuschlagstoffen nacheinander aufzubringen, wobei gegebenenfalls zwischen diese Schichten jeweils ein Film des gleichen Reaktionskomponentenmaterials gelegt wird.

Bei der Herstellung von Artikeln aus Polyurethan- oder Isocyanuratschaumstoffen wird der Zuschlagstoff vorzugsweise in die Polyolkomponente eingegeben. Selbstverständlich ist es aber auch möglich, für den Fall, daß außerordentlich hohe Zuschlagstoffmengen eingeführt werden müssen, beide Reaktionskomponenten in der erfindungsgemäßen Weise mit Zuschlagstoffen zu beladen. Auf diese Weise wird ein zu hohes Ansteigen der Viskosität einer Reaktionskomponente vermieden.

Die Vorrichtung zur Durchführung des Verfahrens besteht aus Vorratsbehältern für die Reaktionskomponenten, von denen Zuleitungen über Dosierpumpen zu einem Mischkopf führen, wobei in einer der Komponentenzuleitungen eine Mischvorrichtung zwischengeschaltet ist, in welche eine Förder- und Dosiereinrichtung mündet, die mit einer Zuschlagstoffvorratsstation verbunden ist.

Das Neue ist darin zu sehen, daß die Mischvorrichtung aus einer Fläche besteht, an der an einem Ende eine Filmauftragsvorrichtung angeordnet ist, wobei über dieser Fläche ein der Dosiervorrichtung zugeordnetes Verteilorgan vorgesehen ist und wobei am anderen Ende der Fläche eine Sammelvorrichtung angeordnet ist, der eine Pumpe nachgeordnet ist, von der schließlich die Zuleitung in den Mischkopf mündet.

Gegenüber den vorbekannten Vorrichtungen, bei denen die Zuschlagstoffe direkt in den Mischkopf eingebracht wurden oder vorher mit einer der Reaktionskomponenten vorvermischt wurden, ist die erfindungsgemäße Vorrichtung störunanfällig. Besonders vorteilhaft macht sich bemerkbar, daß die Mischvorrichtung keinerlei Rührwerke benötigt. Im Prinzip wäre es möglich, daß die Fläche eben und starr angeordnet ist. In diesem Falle jedoch müßte der Filmauftrag und der Auftrag der Zuschlagstoffe diskontinuierlich durchgeführt werden, wobei nach jedem Auftrag mittels eines Abstreifers das Vorgemisch zur Sammelrinne befördert werden müßte. Für die Praxis viel besser geeignet ist eine geneigte Anordnung der Fläche, wobei diese vorzugsweise in ihrer Neigung verstellbar ist. Auf diese Weise kann man durch entsprechende Einstellung der Neigung einen Film erhalten, der kontinuierlich zusammen mit den aufgebrachten Zuschlagstoffen nach unten zur Sammelvorrichtung abläuft.

Dabei ergibt sich alternativ, die Fläche als schräge, aber in sich ebene Ablauffläche auszubilden oder sie in Form eines Trichters zu gestalten. Als weitere Alternative bietet sich an, die Fläche durch ein endloses Förderband zu bilden. Dieses kann sowohl horizontal als auch geneigt angeordnet sein. Am Einlaufende wird der Film aufgetragen, dahinter der Zuschlagstoff aufgebracht und am Ende wird das Vorgemisch vom Förderband abgestreift.

Vorzugsweise ist, in Förderrichtung gesehen, hinter der Dosiervorrichtung eine zweite Filmauftragsvorrichtung vorgesehen. Mit dieser werden die bereits im Zusammenhang mit dem Verfahren beschriebenen Vorteile erzielt.

Die Filmauftragsrichtung besteht beispielsweise aus einer Schlitzdüse von der Breite der Fläche oder aus mehreren Sprühdüsen. Als Dosiervorrichtung für die Zuschlagstoffe eignen sich je nach deren Beschaffenheit, z. B. bei pulvrigem Gut, eine Bandwaage oder Schüttelrinne von der Breite der zu beschickenden Fläche. In diesem Fall bildet die Dosiervorrichtung gleichzeitig das Verteilorgan. Werden jedoch beispielsweise Glasfaserrovings endlos zugeführt, so dient vorzugsweise ein Schneidwerk als Dosiervorrichtung, der ein Verteilorgan in Form einer Rutsche, eines Schleudertellers oder dergleichen nachgeordnet ist. Zum Fördern des Vorgemisches in den Mischkopf sind insbesondere solche Dosierpumpen geeignet, die besonders gegen Verschleiß durch abrasive Zuschlagstoffe geschützt sind.

In einer Zeichnung ist die erfindungsgemäße Vorrichtung in drei Ausführungsbeispielen dargestellt und nachstehend näher erläutert.

Es zeigt

Fig. 1 ein Ausführungsbeispiel der Vorrichtung mit einer Schrägfläche als Mischvorrichtung und einem Faserschnitzelwerk als Dosiereinrichtung für den Zuschlagstoff,

Fig. 2 ein Ausführungsbeispiel der Vorrichtung mit einem endlosen Förderband als Mischvorrichtung und einer Bandwaage als Dosiervorrichtung für den Zuschlagstoff,

Fig. 3 ein Ausführungsbeispiel der Vorrichtung mit einem Trichter (im Schnitt dargestellt) als Mischvorrichtung und einer Dosierschneckenmaschine für den Zuschlagstoff.

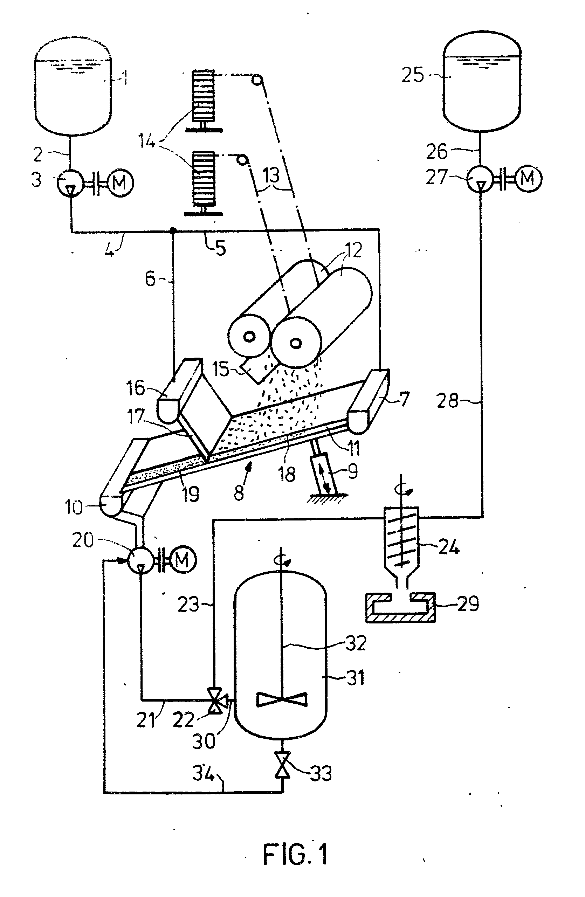

In Fig. 1 führt von einem Vorratsbehälter 1 für Polyol eine Leitung 2 zu einer Dosierpumpe 3. Die von der Dosierpumpe 3 abführende Leitung 4 verzweigt sich in die Leitungen 5, 6. Erstere führt zu einer als Filmauftragsvorrichtung 7 dienenden Verteilerrinne. Sie ist am oberen Ende einer als Mischvorrichtung 8 dienenden, aus einer Platte mit Seitenbegrenzungen (nicht dargestellt) bestehenden Schrägfläche angeordnet. Sie ist mittels einer Stütze 9 in ihrer Neigung einstellbar. Am unteren Ende der Schrägfläche 8 ist eine Sammelrinne 10 angeordnet.

Mittels der Filmauftragsvorrichtung 7 wird die Polyolkomponente als dünner Film 11 auf die Schrägfläche 8 aufgetragen und läuft daran herab. Ein als Dosiervorrichtung 12 dienendes Schnitzwerk zerkleinert die Glasfaserrovings 13, die von eine Vorratsstation 14 bildenden Garnspulen abgezogen werden. Unterhalb des Schnitzelwerkes 12 ist als Verteilorgan 15 ein Blech vorgesehen. Über dieses rutschen die Kurzfasern auf den Film 11 herab, sinken darin ein, rollen und gleiten mit dem Film 11 in Richtung Sammelrinne 10. Die Leitung 6 führt zu einer zweiten Filmauftragsvorrichtung 16, mit der ein weiterer Film 17 auf eine aus einem Gemisch aus Kurzfasern und Polyol bestehende Schicht 18 gelegt wird, so daß alle Kurzfasern restlos von Polyol umgeben werden und schließlich die aus zwei sich vereinigenden Polyolfilmen und homogenen verteilten Kurzfasern gebildete Schicht 19 in die Sammelrinne 10 gleitet. Aus der Sammelrinne 10 gelangt das Vorgemisch über eine Dosierpumpe 20 und eine Leitung 21 zu einem Dreiwegehahn 22. Eine Leitung 23 führt zu einem Mischkopf 24. Diesen Weg nimmt das Vorgemisch, sofern es direkt weiterverarbeitet wird. Von einem Vorratsbehälter 25 gelangt die Isocyanatkomponente über eine Leitung 26 zu einer Dosierpumpe 27, von dort über eine weitere Leitung 28 zum Mischkopf 24, wo sie mit dem Vorgemisch zum Reaktionsgemisch vermischt wird. Schließlich wird das fertige Reaktionsgemisch in ein Formwerkzeug 29 eingebracht. Im Falle einer Zwischenlagerung gelangt das Vorgemisch vom Dreiwegehahn 22 über eine Leitung 30 in einen Pufferbehälter 31, der mit einem Rührwerk 32 versehen ist, um ein Entmischen des Inhalts zu vermeiden. Soll der gespeicherte Vorrat verbraucht werden, wird der Dreiwegehahn 22 so eingestellt, daß die Leitungen 21 und 23 miteinander verbunden sind. Der Hahn 33 am Boden des Pufferbehälters 31 wird geöffnet und das Vorgemisch gelangt über eine Leitung 34 zurück zur Dosierpumpe 20, die es über die Leitungen 21, 23 in den Mischkopf 24 fördert.

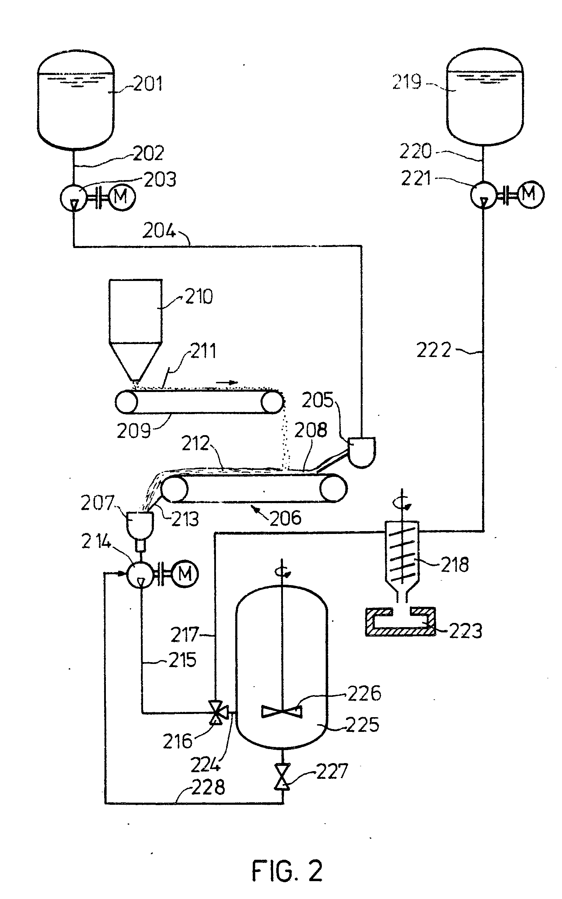

In Fig. 2 führt von einem Vorratsbehälter 201 für Polyol eine Leitung 202 zu einer Dosierpumpe 203. Die von der Dosierpumpe 203 abführende Leitung 204 führt zu einer als Filmauftragsvorrichtung 205 dienenden Verteilerrinne. Sie ist an einem Ende eines als Mischvorrichtung 206 dienenden endlosen, horizontal gelagerten Förderbandes angeordnet. Am anderen Ende des Förderbandes 206 ist eine Sammelrinne 207 vorgesehen. Mittels der Filmauftragsvorrichtung 205 wird die Polyolkomponente als dünner Film 208 auf das Förderband 206 aufgegeben. Eine als Dosiervorrichtung 209 dienende Bandwaage führt als Zuschlagstoff Kreide im gewünschten Verhältnis zu. Der Zuschlagstoff gelangt aus einem Vorratsbehälter 210 auf die Bandwaage 209. Ein Blech sorgt als Verteilorgan 211 für eine gleichmäßig dicke Schicht über die Breite der Bandwaage 209, deren Breite derjenigen des Förderbandes 206 entspricht. Die Bandwaage 209 wirft das Kreidepulver auf den Polyolfilm 208 ab, in dem es versinkt und davon umschlossen wird. Diese aus Polyol und homogen verteiltem Kreidepulver bestehende Schicht 212 wird in die Sammelrinne 207 gefördert. Ein Abstreifer 213 sorgt für die Reinigung des Förderbandes 206. Aus der Sammelrinne 207 gelangt das Polyol/Kreide-Gemisch über eine Dosierpumpe 214 und eine Leitung 215 zu einem Dreiwegehahn 216. Eine Leitung 217 führt zu einem Mischkopf 218. Diesen Weg nimmt das Gemisch, sofern es sofort weiterverarbeitet werden soll. Von einem Vorratsbehälter 219 gelangt die Isocyanatkomponente über eine Leitung 220 zu einer Dosierpumpe 221, von dort über eine Leitung 222 zum Mischkopf 218, wo sie mit dem Vorgemisch zum Reaktionsgemisch vermengt wird. Schließlich wird das fertige Reaktionsgemisch in ein Formwerkzeug 223 eingebracht. Im Fall einer Zwischenlagerung gelangt das Vorgemisch vom Dreiwegehahn 216 über die Leitung 224 in einen Pufferbehälter 225, der mit einem Rührwerk 226 ausgestattet ist, um ein Entmischen des Inhalts zu vermeiden. Soll der gepufferte Vorrat verbraucht werden, wird der Dreiwegehahn 216 so eingestellt, daß die Leitungen 215 und 217 verbunden sind. Der Hahn 227 am Boden des Pufferbehälters 225 wird geöffnet, und das Vorgemisch gelangt über eine Leitung 228 zurück zur Dosierpumpe 214, die es über die Leitungen 215, 217 in den Mischkopf 218 fördert.

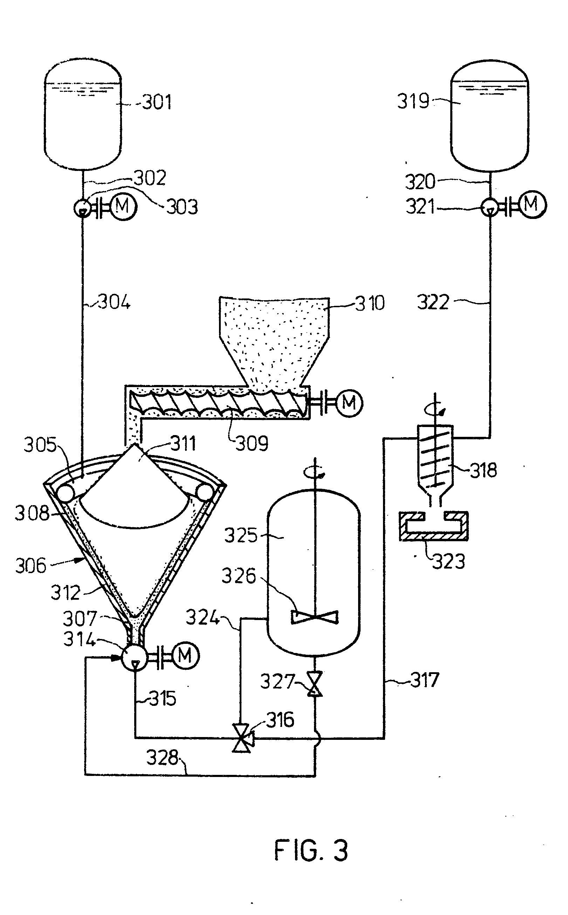

In Fig. 3 führt von einem Vorratsbehälter 301 für Polyol eine Leitung 302 zu einer Dosierpumpe 303. Die davon abführende Leitung 304 führt zu einer als Filmauftragsvorrichtung 305 dienenden Ringdüse. Sie ist am oberen Ende eines als Mischvorrichtung 306 dienenden Trichters angeordnet. Am Auslauf des Trichters 306 ist ein Sammelstutzen 307 vorgesehen. Mittels der Filmauftragsvorrichtung 305 wird die Polyolkomponente als dünner Film 308 auf die eine Schrägfläche darstellende Innenwand des Trichters 306 aufgebracht. Eine als Dosiervorrichtung 309 dienende Schneckenmaschine führt als Zuschlagstoff Bariumsulfat in Pulverform im gewünschten Verhältnis zu. Es gelangt aus einem Vorratsbehälter 310 in die Schneckenmaschine 309. An ihrem Auslaß ist ein pyramidenförmiger Kegel als Verteilorgan 311 koaxial zur Achse des Trichters 306 angeordnet. Das Bariumsulfatpulver rieselt durch Schwerkraft von dem Verteilorgan 311 nach allen Seiten gleichmäßig herab und fällt auf den Film 308, versinkt darin, rollt und gleitet zusammen mit dem Polyol als Schicht 312 in den Sammelstutzen 307. Aus dem Sammelstutzen 307 gelangt das Vorgemisch aus Polyol und Bariumsulfat über eine Dosierpumpe 314 und eine Leitung 315 zu einem Dreiwegehahn 316. Eine Leitung 317 führt zu einem Mischkopf 318. Diesen Weg nimmt das Gemisch, sofern es sofort weiterverarbeitet werden soll. Von einem Vorratsbehälter 319 gelangt die Isocyanatkomponente über eine Leitung 320 in eine Dosierpumpe 321, von dort über eine Leitung 322 zum Mischkopf 318, wo sie mit dem Vorgemisch zum Reaktionsgemisch vermengt wird. Schließlich wird das fertige Reaktionsgemisch in ein Formwerkzeug 323 eingebracht. Im Fall einer Zwischenlagerung gelangt das Vorgemisch vom Dreiwegehahn 316 über die Leitung 324 in einen Pufferbehälter 325, der mit einem Rührwerk 326 ausgestattet ist, um ein Entmischen des Inhalts zu verhindern. Soll der gepufferte Vorrat verbraucht werden, wird der Dreiwegehahn 316 so eingestellt, daß die Leitungen 315 und 317 verbunden sind. Der Hahn 327 am Boden des Pufferbehälters 325 wird geöffnet, und das Vorgemisch gelangt über eine Leitung 328 zurück zur Dosierpumpe 314, die es über die Leitungen 315, 317 in den Mischkopf 318 fördert.

## Patentansprüche

1. Verfahren zum Herstellen eines Gemisches aus mindestens zwei fließfähigen, schaumstoffbildenden Reaktionskomponenten und feinteiligem Zuschlagstoff, wobei eine der Reaktionskomponenten zu einem Film ausgebreitet und dieser Film mit dem Zuschlagstoff zusammengebracht wird, dadurch gekennzeichnet, daß der Zuschlagstoff homogen verteilt auf den Film aufgegeben wird, daß die einzelnen Teilchen in den Film einsinken, wobei sie vom Komponentenmaterial umschlossen werden, und daß dieses zunächst als Film vorliegende Vorgemisch anschließend zu einem Strom zusammengeführt und der Mischstelle zugeleitet wird, wo die Vermischung mit der zweiten Reaktionskomponente erfolgt.

2. Verfahren nach Anspruch 1, dadurch gekennzeichnet, daß der Film auf einer geneigten Ebene geführt wird.

3. Verfahren nach Anspruch 1 oder 2, dadurch gekennzeichnet, daß nach dem Aufbringen des Zuschlagstoffes ein zweiter Film derselben Reaktionskomponente darübergelegt wird.

4. Verfahren nach einem der Ansprüche 1 bis 3, dadurch gekennzeichnet, daß das Vorgemisch aus der Reaktionskomponente und Zuschlagstoff zwischengelagert wird.

5. Vorrichtung zur Durchführung des Verfahrens nach Anspruch 1, bestehend aus Vorratsbehältern (1; 25; 201, 219; 301, 319) für die Reaktionskomponenten, von denen Zuleitungen (2, 4, 5, 6, 26, 28; 202, 204, 222; 302, 304, 322) über Dosierpumpen (3; 27; 203, 221; 303, 321) zu einem Mischkopf (24; 218; 318) führen, wobei in einer der Komponentenzuleitungen (2, 4, 5, 6; 202, 204; 302, 304) eine Mischvorrichtung (8; 206; 306) zwischengeschaltet ist, in welche eine Förder- und Dosiervorrichtung (12; 209; 309) mündet, die mit einer Zuschlagstoffvorratsstation (14; 210; 310) verbunden ist, dadurch gekennzeichnet, daß die Mischvorrichtung (8; 206; 306) aus einer Fläche besteht, an deren einem Ende eine Filmauftragsvorrichtung (7; 205; 305) angeordnet ist, wobei über dieser Fläche ein der Dosiervorrichtung (12; 209; 309) zugeordnetes Verteilorgan (15; 211; 311) vorgesehen ist, und wobei am anderen Ende der Fläche eine Sammelvorrichtung (10; 207; 307) angeordnet ist, der schließlich eine Pumpe (20; 214; 314) zugeordnet ist, von der die Zuleitung (21, 23; 215, 217; 315, 317) in den Mischkopf (24; 218; 318) mündet.

6. Vorrichtung nach Anspruch 5, dadurch gekennzeichnet, daß die Fläche (8; 306) geneigt angeordnet ist.

7. Vorrichtung nach Anspruch 6, dadurch gekennzeichnet, daß die Neigung der Fläche (8) verstellbar ist.

8. Vorrichtung nach einem der Ansprüche 5 bis 7, dadurch gekennzeichnet, daß die Fläche (8) als schräge Ablaufebene ausgebildet ist.

9. Vorrichtung nach einem der Ansprüche 5 bis 7, dadurch gekennzeichnet, daß die Fläche (306) als Trichter ausgebildet ist.

10. Vorrichtung nach einem der Ansprüche 5 bis 8, dadurch gekennzeichnet, daß die Fläche (206) durch ein endloses Förderband gebildet ist.

## Claims

1. Process for the preparation of a mixture of at least two foam-forming reaction components which are capable of flow and a fine-particled additive, one of the reaction components being spread out to form a film and this film being brought into contact with the additive, characterised in that the additive is distributed homogeneously over the film, in that the individual particles sink into the film, whereupon they are enveloped by component material, and in that this preliminary mixture which is initially present as a film is then brought together to form a stream and is passed to the mixing point, where mixing with the second reaction component takes place.

2. Process according to Claim 1, characterised in that the film is spread on an inclined plane.

3. Process according to Claim 1 or 2, characterised in that, after application of the additive, a second film of the same reaction component is placed on top.

4. Process according to one of Claims 1 to 3, characterised in that the preliminary mixture of the reaction component and additive is intermediately stored.

5. Device for carrying out the process according to Claim 1, consisting of storage containers (1; 25; 201; 219; 301; 319) for the reaction components, from which lines (2, 4, 5, 6, 26, 28; 202, 204, 222; 302, 304, 322) lead via metering pumps (3; 27; 203; 221; 303, 321) to a mixing head (24; 218; 318), a mixing device (8; 206; 306) into which a conveying and metering device (12; 209; 309) connected to an additive stock station (14; 210; 310) opens being inserted in one of the component lines (2, 4, 5, 6; 202, 204; 302, 304), characterised in that the mixing device (8; 206; 306) consists of a surface, at one end of which a film applicator (7; 205; 305) is located, a distributor organ (15; 211; 311) associated with the metering device (12; 209; 309) being provided above this surface, and a collecting device (10; 207; 307), with which, finally, a pump (20; 214; 314), from which the line (21, 23; 215; 217; 315, 317) opens into the mixing head (24; 218; 318), being located at the other end of the surface.

6. Device according to Claim 5, characterised in that the surface (8; 306) is arranged at an angle.

7. Device according to Claim 6, characterised in that the angle of the surface (8) can be adjusted.

8. Device according to one of Claims 5 to 7, characterised in that the surface (8) is designed as an inclined draining plane.

9. Device according to one of Claims 5 to 7, characterised in that the surface (306) is designed as a funnel.

10. Device according to one of Claims 5 to 8, characterised in that the the surface (206) is formed by a continuous conveyor belt.

## Revendications

1. Procédé de fabrication d'un mélange d'au moins deux composants réactionnels fluides formant de la matière cellulaire et d'un additif finement divisé, un des composants réactionnels s'étalant en un film et ce film étant réuni avec l'additif, caractérisé en ce que l'additif distribué de manière homogène est ajouté au film, en ce que les particules individuelles s'enfoncent dans le film où elles sont entourées du matériau du composant, et en ce que ce prémélange qui se présente initialement sous la forme d'un film est ensuite réuni en un courant et envoyé au point de mélange où le mélange avec le deuxième composant réactionnel a lieu.

2. Procédé selon la revendication 1, caractérisé en ce que le film est conduit sur un plan incliné.

3. Procédé selon la revendication 1 ou 2, caractérisé en ce qu'après l'application de l'additif on applique sur celui-ci un second film du même composant réactionnel.

4. Procédé selon l'une des revendications 1 à 3, caractérisé en ce que le prémélange du composant réactionnel et de l'additif est entreposé intermédiairement.

5. Appareil pour la mise en oevre du procédé selon la revendication 1, consistant en réservoirs de stockage (1; 25; 201; 219; 301; 319) pour les composants réactionnels, dont les conduites d'amenée (2, 4, 5, 6, 26, 28; 202, 204, 222; 302, 304, 322) conduisent par l'intermédiaire de pompes doseuses (3; 27; 203, 221; 303, 321) à une tête mélangeuse (24; 218; 318), dans une des conduites d'amenée de composant (2, 4, 5, 6; 202, 204; 302, 304) étant intercalé un dispositif mélangeur (8; 206; 306) dans lequel débouche un dispositif transporteur et doseur (12; 209; 309) qui est raccordé à une station de stockage d'additif (14; 210; 310), caractérisé en ce que le dispositif mélangeur (8; 206; 306) consiste en une surface à une extrémité de laquelle est installé un dispositif applicateur de film (7; 205; 305), sur cette surface étant prévu un dispositif distributeur (15; 211; 311) adjoint au dispositif doseur (12; 209; 309), tandis qu'à l'autre extrémité de la surface est monté un dispositif collecteur (10; 207; 307) auquel finalement est adjointe une pompe (20; 214; 314) dont la conduite d'amenée (21, 23; 215, 217; 315, 317) débouche dans la tête mélangeuse (24; 218; 318).

6. Appareil selon la revendication 5, caractérisé en ce que la surface (8; 306) est montée inclinée.

7. Appareil selon la revendication 6, caractérisé en ce que l'inclinaison de la surface (8) est réglable.

8. Appareil selon l'une des revendications 5 à 7, caractérisé en ce que la surface (8) est constituée en un plan d'écoulement incliné.

9. Appareil selon l'une des revendications 5 à 7, caractérisé en ce que la surface (306) est constituée en entonnoir.

10. Appareil selon l'une des revendications 5 à 8, caractérisé en ce que la surface (206) est constituée par une bande transporteuse sans fin.

FIG. 1

FIG. 2

FIG. 3